# EUROPÄISCHE PATENTANMELDUNG

(11) **EP 1 753 062 A1**
(43) Veröffentlichungstag der Anmeldung: **14.02.2007**
(21) Anmeldenummer: 06117233.4
(22) Anmeldetag: 14.07.2006
(51) Int. Cl.: H01M 8/04, H01M 8/10

(54) **Verfahren zur Ermittlung und/oder Einstellung des Oxidator-Volumenstroms bei einem Brennstoffzellensystem und Brennstoffzellensystem**

(30) Priorität: 03.08.2005 DE 102005038455
(71) Anmelder: Deutsches Zentrum für Luft- und Raumfahrt e.V., 51147 Köln (DE)
(72) Erfinder: Schirmer, Johannes, 71549, Auenwald (DE); Graf, Siegfried, 70176, Stuttgart (DE)
(74) Vertreter: Hoeger, Stellrecht & Partner Patentanwälte

(57) **Zusammenfassung**

Verfahren zur Ermittlung und/oder Einstellung des Oxidator-Volumenstroms, welcher einer Kathodeneinrichtung eines Brennstoffzellensystems zugeführt wird, bei dem der Oxidator über eine angetriebene Fördereinrichtung der Kathodeneinrichtung zugeführt wird, der Gegendruck gemessen wird, gegen den Oxidator am Brennstoffzellensystem gefördert wird, und aus dem gemessenen Gegendruck und einem oder mehreren Antriebsparametern der Fördereinrichtung der zugeführte Oxidator-Volumenstrom bestimmt wird.

## Beschreibung

Die Erfindung betrifft ein Verfahren zur Ermittlung und/oder Einstellung des Oxidator-Volumenstroms, welcher einer Kathodeneinrichtung eines Brennstoffzellensystems zugeführt wird, bei dem der Oxidator über eine angetriebene Fördereinrichtung der Kathodeneinrichtung zugeführt wird.

Die Erfindung betrifft ferner ein Brennstoffzellensystem, umfassend mindestens eine Brennstoffzelle mit einer Anodeneinrichtung und einer Kathodeneinrichtung, wobei der Anodeneinrichtung Brennstoff und der Kathodeneinrichtung Oxidator zuführbar ist.

Aus der JP 2005-44737 A ist ein Kontrollverfahren für die Luftströmung bei einem Direktmethanol-Brennstoffzellensystem bekannt, bei dem der Sauerstofffluss vergleichmäßigt wird.

Aus der DE 101 18 151 A1 ist ein Verfahren zur Steuerung eines Brennstoffzellensystems bekannt. Das Brennstoffzellensystem umfasst eine Brennstoffzelle, die einen Anodenauslass aufweist, der ein H₂-haltiges Anodenabgas austrägt, und einen Kathodenauslass aufweist, der ein O₂-haltiges Kathodenabgas austrägt, eine Wasserstoffquelle zur Lieferung von Wasserstoff an eine Anode der Brennstoffzelle, und einen Luftkompressor zur Lieferung von Sauerstoff an eine Kathode der Brennstoffzelle. Ferner ist ein modulierbarer Druckregler unterstromig des Kathodenauslasses zur Änderung des Gegendrucks des Kathodenabgases vorgesehen. Die Umgebung um das System herum wird erfasst und ein Signal, dass diese angibt, an eine Steuerung gesendet. Zumindest ein Betriebszustand des Systems wird erfasst und ein Signal, das diesen angibt, an eine Steuerung gesendet. Der Regler wird über die Steuerung in Ansprechen auf die Signale zur Optimierung der Leistung des Systems in der Umgebung moduliert.

Aus der EP 0 629 013 A2 ist eine Vorrichtung zur Regelung der Leistung einer luftatmenden Brennstoffzelle mit einem in der Luftzuführungsleitung zur Brennstoffzelle angeordneten Verdichter mit veränderlicher Drehzahl und mit einem in der Luftabführungsleitung angeordneten Expander bekannt, wobei der Verdichter und der Expander auf einer gemeinsamen Welle angeordnet sind. Es wird ein Expander mit veränderlichem Schluckvermögen verwendet. Die Drehzahl des Verdichters und das Schluckvermögen des Expanders wird durch ein Steuergerät auf vorgegebene Sollwerte eingestellt. Ausgehend vom gemessenen Brennstoffzellenstrom wird ein Sollwert für den Luftvolumenstrom ermittelt, der Istwert des Luftvolumenstroms durch Anpassung der Verdichterdrehzahl auf diesen Sollwert geregelt und der Druck im Kathodenraum der Brennstoffzelle durch Anpassung des Schluckvermögens des Expanders auf einen vorgegebenen Betriebsdruck eingestellt.

Üblicherweise wird Oxidator der Kathodeneinrichtung mit einem konstanten Volumenstrom zugeführt. Bei dem Oxidator handelt es sich beispielsweise um Luftsauerstoff, welcher in einem Luftstrom zugeführt wird. Ist der Oxidator-Volumenstrom zu hoch, dann kann ein unerwünschter erhöhter Wasseraustrag erfolgen. Es ist ein erhöhter Leistungsbedarf notwendig. Es kann auch eine zu starke Kühlung erfolgen. Ist der Oxidator-Volumenstrom zu niedrig, dann ist unter Umständen die elektrochemische Umsetzung nicht effektiv (da sie im Oxidatorunterschuss erfolgt) und die Kühlung kann zu gering sein.

Der Erfindung liegt die Aufgabe zugrunde, ein Verfahren der eingangs genannten Art bereitzustellen, welches auf einfache Weise durchführbar ist.

Diese Aufgabe wird bei dem genannten Verfahren erfindungsgemäß dadurch gelöst, dass der Gegendruck gemessen wird, gegen den Oxidator am Brennstoffzellensystem gefördert wird, und aus dem gemessenen Gegendruck und einem oder mehreren Antriebsparametern der Fördereinrichtung der zugeführte Oxidator-Volumenstrom bestimmt wird.

Die Fördereinrichtung, welche beispielsweise einen Ventilator oder einen Kompressor umfasst, wird entsprechend angesteuert. Der oder die Antriebsparameter, wie beispielsweise eine Steuerspannung des Antriebsmotors, sind bekannt. Der Gegendruck lässt sich über einen oder mehrere Drucksensoren messen. Es hat sich gezeigt, dass der Volumenstrom eine erhebliche Abhängigkeit sowohl von dem Gegendruck als auch von dem oder den Antriebsparametern der Fördereinrichtung aufweist. Der Gegendruck ist auch zeitlich veränderlich. Es können Druckschwankungen auftreten, die beispielsweise durch Wassertropfen, unterschiedliche Feuchtegrade oder durch verstopfte Kanäle verursacht sind. Bereits relativ kleine Druckschwankungen können einen großen Einfluss auf den Oxidator-Volumenstrom haben.

Bei der erfindungsgemäßen Lösung wird der Gegendruck direkt gemessen und aus dem oder den Antriebsparametern wird der Ist-Oxidator-Volumenstrom ermittelt. Es ist dann kein Volumenstrom-Sensor notwendig. Dadurch lässt sich das Brennstoffzellensystem einfach und kostengünstig aufbauen. Ferner lässt sich Gewicht und Volumen reduzieren.

Die Ermittlung des Ist-Werts lässt sich dazu verwenden, um einen Regelkreis aufzubauen. Der Regelungsaufwand lässt sich gering halten. Insbesondere lässt sich der Oxidator-Volumenstrom über Steuerung des oder der Antriebsparameter auf einfache Weise regeln.

Das Kennlinienfeld, welches die Abhängigkeit des Volumenstroms von dem Gegendruck und dem oder den Antriebsparametern charakterisiert, kann über Kalibrierungsdaten, welche am Brennstoffzellensystem ermittelt werden, aufgestellt werden.

Das erfindungsgemäße Verfahren lässt sich bei einer Vielzahl von Brennstoffzellentypen einsetzen. Es kann beispielsweise im Zusammenhang mit Direktmethanol-Brennstoffzellen oder mit Polymermembran-Brennstoffzellen eingesetzt werden.

Insbesondere umfasst die Fördereinrichtung einen Verdichter beispielsweise in Form eines Ventilators, eines Luftförderers oder eines Kompressors. Der Verdichter ist entsprechend angetrieben, wobei vorzugsweise ein oder mehrere Antriebsparameter einstellbar sind, um die Leistung des Verdichters und damit des Ausgangs-Oxidator-Volumenstroms einzustellen.

Insbesondere ist der mindestens eine Antriebsparameter eine Steuerspannung oder ein Steuerstrom eines Antriebs der Fördereinrichtung. Ein solcher Antriebsparameter lässt sich auf einfache Weise erfassen bzw. einstellen.

Günstigerweise wird der Oxidator-Volumenstrom über zuvor bestimmte Kalibrierungsdaten ermittelt. Bei gemessenem Gegendruck und bekanntem Antriebsparameter oder bekannten Antriebsparameter lässt sich dann aus einem Kennlinienfeld (entsprechend den Kalibrierungsdaten) der Oxidator-Volumenstrom (als Ist-Oxidator-Volumenstrom) ablesen. Falls eine Einregelung des Oxidator-Volumenstroms auf einen Soll-Oxidator-Volumenstrom erfolgen soll, dann lassen sich aus dem Kennlinienfeld der Kalibrierungsdaten die Richtungen für die Einregelung ermitteln; dadurch lässt sich ein Soll-Wert schnell erreichen bzw. während des Betriebs lässt sich der Oxidator-Luftstrom auf effektive Weise auf einem Soll-Wert halten.

Insbesondere liegen die Kalibrierungsdaten in einer Form vor, welche die Abhängigkeit des Oxidator-Volumenstroms vom Gegendruck und dem mindestens einen Antriebsparameter charakterisiert. Dadurch lässt sich auf einfache Weise bei bekanntem Antriebsparameter bzw. bekannten Antriebsparametern und gemessenem Gegendruck der Ist-Oxidator-Volumenstrom ermitteln.

Insbesondere wird der Oxidator-Volumenstrom auf einen Arbeitspunkt oder auf einen Arbeitspunktbereich eingestellt oder eingeregelt. Der Arbeitspunkt bzw. Arbeitspunktbereich wird vorzugsweise so gewählt, dass sich ein hoher Leistungswirkungsgrad des Brennstoffzellensystems mit optimierter Kühlung ergibt.

Insbesondere wird der Arbeitspunkt oder Arbeitspunktbereich als im wesentlichen konstant festgelegt. Es ist dabei insbesondere vorgesehen, dass Oxidator im überstöchiometrischen Verhältnis durchgeführt wird.

Insbesondere ist die Regelgröße der Oxidator-Volumenstrom. Die Regelung erfolgt derart, dass der Oxidator-Volumenstrom auf einem Soll-Wert liegt. Es wird dazu geprüft, ob eine Abweichung zwischen einem Ist-Wert des Oxidator-Volumenstroms und einem Soll-Wert vorliegt.

Die Steuergröße oder Steuergrößen sind der oder die Antriebsparameter. Diese lassen sich auf einfache Weise erfassen und einstellen. Über das Kennlinienfeld des Brennstoffzellensystems für die Abhängigkeit des Volumenstroms vom Gegendruck und dem oder den Antriebsparametern lässt sich auf einfache Weise die Richtung für die Steuerung des oder der Antriebsparameter ermitteln, wenn eine Abweichung des Ist-Werts vom Soll-Wert vorliegt.

Insbesondere wird ein Ist-Wert des Oxidator-Luftstroms mit einem Soll-Wert des Oxidator-Luftstroms verglichen und der oder die Antriebsparameter werden variiert, bis der Soll-Wert erreicht wird.

Die Variation des mindestens einen Antriebsparameters erfolgt vorzugsweise auf Grundlage von Kalibrierungsdaten, d. h. es wird von der Art der Abweichung (nach oben oder nach unten) und gegebenenfalls auch von der Größe der Abweichung eine entsprechende Einstellung des oder der Antriebsparameter durchgeführt, um schnell den Soll-Wert zu erreichen.

Günstigerweise wird zur Messung des Gegendrucks mindestens ein Drucksensor vorgesehen. Dadurch lässt sich die Ermittlung bzw. Regelung des Oxidator-Luftstroms auf einfache und kostengünstige Weise durchführen.

Es kann dabei vorgesehen sein, dass der mindestens eine Drucksensor an einem Zuführungsstrang zur Kathodeneinrichtung angeordnet wird, um den Gegendruck auf effektive Weise erfassen zu können.

Der Erfindung liegt ferner die Aufgabe zugrunde, ein Brennstoffzellensystem der eingangs genannten Art bereitzustellen, bei welchem der Regelungsaufwand für die Oxidatorzuführung gering gehalten ist.

Diese Aufgabe wird bei dem eingangs genannten Brennstoffzellensystem erfindungsgemäß dadurch gelöst, dass mindestens ein Drucksensor vorgesehen ist, durch den der Gegendruck am Brennstoffzellensystem messbar ist, gegen welchen Oxidator gefördert wird (bzw. gefördert werden muss).

Das erfindungsgemäße Brennstoffzellensystem weist die bereits im Zusammenhang mit dem erfindungsgemäßen Verfahren erläuterten Vorteile auf.

Weitere vorteilhafte Ausführungsformen wurden ebenfalls bereits im Zusammenhang mit dem erfindungsgemäßen Verfahren erläutert.

Bei dem erfindungsgemäßen Brennstoffzellensystem handelt es sich beispielsweise um ein Direktoxidations-Brennstoffzellensystem wie ein Direktmethanol-Brennstoffzellensystem oder Direktethanol-Brennstoffzellensystem. Es kann sich auch um ein Polymermembran-Brennstoffzellensystem oder um einen anderen Typ von Brennstoffzellensystem handeln.

Insbesondere ist der mindestens eine Drucksensor an einem Zuführungsstrang für Oxidator zur Kathodeneinrichtung angeordnet. Dadurch lässt sich auf einfache und effektive Weise der Gegendruck ermitteln. Es ist grundsätzlich möglich, dass beispielsweise an einem Abführungsstrang der Kathodeneinrichtung eine Saugpumpe sitzt und der Gegendruck an der Saugpumpe ermittelt wird.

Günstig ist es, wenn eine Steuerungs- und/oder Regelungseinrichtung vorgesehen ist, über welche eine angetriebene Fördereinrichtung für Oxidator ansteuerbar ist. Dadurch lässt sich eine einfache Regelung des Oxidator-Volumenstroms erreichen.

Günstig ist es, wenn der mindestens eine Drucksensor mit der Steuerungs- und/oder Regelungseinrichtung verbunden ist, um dieser seine Daten bereitzustellen. Die Steuerungs- und/oder Regelungseinrichtung kann dann aus einem vorgegebenen Kennlinienfeld mit den Daten des Drucksensors den Ist-Oxidator-Volumenstrom ermitteln.

Günstig ist es, wenn die Steuerungs- und/oder Regelungseinrichtung aus einem oder mehreren Antriebsparametern der Fördereinrichtung und den Daten des Drucksensors den Oxidator-Volumenstrom ermittelt. Es ist dann kein Volumenstromsensor notwendig.

Insbesondere regelt die Steuerungs- und/oder Regelungseinrichtung den Oxidator-Volumenstrom über Steuerung eines oder mehrerer Antriebsparameter der Fördereinrichtung. Der Antriebsparameter bzw. die Antriebsparameter lassen sich auf einfache Weise erfassen und steuern. Beispielsweise handelt es sich um eine Steuerspannung, die auf einfache Weise variierbar ist.

Insbesondere umfasst die Fördereinrichtung einen Verdichter, um Oxidator verdichtet der Kathodeneinrichtung zuführen zu können. Bei dem Verdichter kann es sich um einen Kompressor, einen Ventilator oder einen Luftförderer handeln.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels eines erfindungsgemäßen Brennstoffzellensystems; und
- Figur 2: ein Diagramm der Abhängigkeit eines Luft-Volumenstroms V_{L} vom Gegendruck p und von der Steuerspannung eines Kompressors.

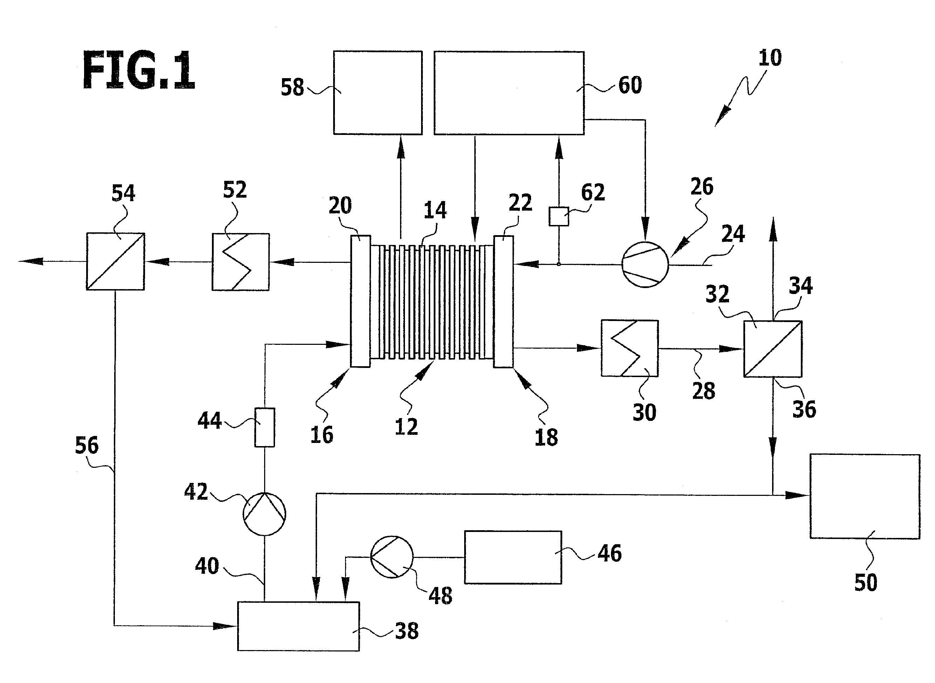

Ein Ausführungsbeispiel eines erfindungsgemäßen Brennstoffzellensystems, welches in Figur 1 gezeigt und dort mit 10 bezeichnet ist, umfasst einen Brennstoffzellenblock 12 (Brennstoffzellenstapel, Brennstoffzellen-Stack), welcher eine Mehrzahl von Brennstoffzellen 14 aufweist.

Jede Brennstoffzelle 14 hat eine Kathode und eine Anode, wobei die Gesamtheit der Anoden des Brennstoffzellenblocks 12 eine Anodeneinrichtung 16 und die Gesamtheit der Kathoden des Brennstoffzellenblocks 12 eine Kathodeneinrichtung 18 bildet.

Zwischen den Anoden und Kathoden jeder Brennstoffzelle 14 des Brennstoffzellenblocks 12 ist ein protonenleitender Elektrolyt angeordnet, welcher beispielsweise in Form einer Membran ausgebildet ist. Die Anoden und die Kathoden und damit auch die Anodeneinrichtung 16 und die Kathodeneinrichtung 18 sind elektrisch über einen Stromkollektor kontaktiert.

Der Anodeneinrichtung 16 ist ein Fluidverteiler 20 zugeordnet, über den den Anoden des Brennstoffzellenblocks 12 Brennstoff zuführbar ist. Der Kathodeneinrichtung 18 ist ein Fluidverteiler 22 zugeordnet, über den den Kathoden des Brennstoffzellenblocks 12 Oxidator zuführbar ist.

Bei dem Oxidator handelt es sich beispielsweise um Luftsauerstoff, wobei der Kathodeneinrichtung 18 dann ein Luft-Volumenstrom zugeführt wird.

Bei dem Brennstoffzellensystem 10 kann es sich beispielsweise um ein Direktoxidations-Brennstoffzellensystem handeln, welchem Brennstoff in flüssiger Form zugeführt wird. Beispielsweise ist es als Direktmethanol-Brennstoffzellensystem (DMFC) oder als Direktethanol-Brennstoffzellensystem (DEFC) ausgebildet, wobei der Brennstoff (Methanol oder Ethanol) insbesondere in wässriger Lösung zugeführt wird.

Bei dem Brennstoffzellensystem 10 kann es sich aber auch um einen anderen Typ von Brennstoffzellensystem handeln, wie beispielsweise um ein Polymermembran-Brennstoffzellensystem (PMFC).

Im folgenden wird das Brennstoffzellensystem 10 beispielhaft als Direktmethanol-Brennstoffzellensystem beschrieben.

Bei einem Direktmethanol-Brennstoffzellensystem erfolgt an einer Brennstoffzelle 14 eine kalte Verbrennung gemäß folgender Bruttoreaktionsgleichung:

CH₃OH + 3/2 O₂ → 2H₂O + CO₂.

Dabei wird elektrischer Strom produziert. Durch die Stromproduktion tritt ein Brennstoffverbrauch und Oxidatorverbrauch auf.

Luftsauerstoff wird über einen Zuführungsstrang 24 der Kathodeneinrichtung 18 zugeführt. Es ist eine Fördereinrichtung 26 vorgesehen, um den Oxidator zu fördern und insbesondere einen definierten Oxidator-Volumenstrom und insbesondere Luft-Volumenstrom dem Brennstoffzellenblock 12 bereitzustellen.

Die Fördereinrichtung 26 ist über einen motorischen Antrieb angetrieben. Sie umfasst beispielsweise einen Ventilator und/oder Förderer und/oder Kompressor.

Der Kathodeneinrichtung 18 ist ein Abführungsstrang 28 zugeordnet, durch den nicht verbrauchter Oxidator abführbar ist; durch den Abführungsstrang 28 wird sauerstoffarme Luft abgeführt. Das abgeführte Fluid enthält Wasser. Der Abführungsstrang 28 umfasst einen Kondensator 30, welcher der Kathodeneinrichtung 18 nachgeschaltet ist. Mit dem Kondensator 30 lässt sich das Abführungsprodukt, welches von der Kathodeneinrichtung 18 kommt, abkühlen, wobei insbesondere Wasser verflüssigt wird. Dem Kondensator 30 ist ein Wasserabscheider 32 nachgeschaltet, mittels dem sich Wasser von den übrigen Bestandteilen trennen lässt.

Der Wasserabscheider 32 weist einen ersten Ausgang 34 auf, über den sich gasförmige Produkte abführen lassen. Ferner weist er einen zweiten Ausgang 36 auf, über den sich flüssiges Wasser auskoppeln lässt.

Der Anodeneinrichtung 16 wird ein Brennstoff-Wasser-Gemisch aus einem Behälter 38 zugeführt. Dieser Behälter 38 ist über eine Leitung 40 ausgangsseitig an die Anodeneinrichtung 16 angeschlossen.

An der Leitung 40 ist eine Pumpe 42 angeordnet, um das Brennstoff-Wasser-Gemisch zu fördern.

Es kann ein Sensor 44 vorgesehen sein, um die Brennstoffmenge in dem Brennstoff-Wasser-Gemisch zu ermitteln. (Bei Direktmethanol-Brennstoffzellen kommt es in der Regel zu einem elektroosmotischen Übertritt des Brennstoffs von der Anodenseite zu der Kathodenseite [Brennstoff-Crossover oder Brennstoff-Drag]. An der Kathodenseite tritt eine bezüglich der Stromproduktion nicht nutzbare direkte Oxidation des Brennstoffs mit Sauerstoff auf. Der Brennstoff-Crossover ist abhängig von der Brennstoff-Konzentration, wobei bei niedrigerer Brennstoff-Konzentration die Übertrittsmenge an Brennstoff geringer ist. Die an der Anodeneinrichtung 16 verbrauchte Brennstoffmenge ist deshalb größer als die Menge an Brennstoff, welche gemäß obiger Gleichung umgesetzt wird; der Brennstoff-Crossover trägt ebenfalls zum Brennstoffverbrauch an der Anodeneinrichtung 16 bei.)

Über einen Brennstoffvorrat 46 lässt sich Brennstoff dem Behälter 38 zuführen. Zur dosierten Zuführung ist beispielsweise eine Dosierpumpe 48 vorgesehen.

Der Behälter 38 ist über einen Eingang ferner an einen Wasservorrat 50 gekoppelt, über den sich Wasser dem Behälter 38 zuführen lässt, um ein Brennstoff-Wasser-Gemisch bereitstellen zu können.

Der Wasserabscheider 32 ist mit seinem zweiten Ausgang 36 direkt oder indirekt an den Wasservorrat 50 gekoppelt, um abgeschiedenes Wasser im System halten zu können, d. h. um einen Wasser-Kreislauf bereitstellen zu können.

Es ist grundsätzlich auch möglich, dass Wasser, welches von dem Wasserabscheider 32 geliefert wird, vollständig oder teilweise aus dem Brennstoffzellensystem 10 abgeschieden wird.

Der Anodeneinrichtung 16 ist ausgangsseitig ein Kondensator 52 zugeordnet, über den sich von der Anodeneinrichtung 16 abgeführte Produkte abkühlen lassen. Diesem Kondensator 52 ist ein Wasserseparator 54 nachgeschaltet. Mit dem Wasserseparator lassen sich insbesondere Wasser und CO₂ trennen.

Der Wasserseparator 54 ist ausgangsseitig über eine Leitung 52 mit dem Behälter 38 verbunden. Dadurch lässt sich abgeschiedenes Wasser in den Behälter einströmen, so dass am Wasserseparator 54 abgeschiedenes Wasser im Brennstoffzellensystem 10 gehalten werden kann.

Der von dem Brennstoffzellenblock 12 erzeugte Strom wird an einen Verbraucher 58 abgegeben, wobei eine Formung/Wandlung der elektrischen Energie vor Abgabe vorgesehen sein kann.

Zur Steuerung und/oder Regelung des Brennstoffzellensystems ist eine Steuerungs- und/oder Regelungseinrichtung 60 vorgesehen. Durch diese wird insbesondere die Brennstoffzuführung zu der Anodeneinrichtung 16 gesteuert, wobei vorzugsweise der Brennstoff-Crossover berücksichtigt wird. Sie empfängt dazu beispielsweise Daten des Sensors 44.

Es kann vorgesehen sein, dass die Steuerungs- und/oder Regelungseinrichtung 60 die Oxidatorzuführung zur der Kathodeneinrichtung 18 steuert bzw. regelt und insbesondere den Oxidator-Volumenstrom (beispielsweise als Luft-Volumenstrom), welcher der Kathodeneinrichtung 18 zugeführt wird, steuert bzw. regelt.

Im Zuführungsstrang 24 ist ein Drucksensor 62 angeordnet, durch den der Gegendruck ermittelbar ist, gegen den der Oxidator-Volumenstrom an dem Brennstoffzellensystem 10 gefördert werden muss.

Beim Betrieb des Brennstoffzellensystems 10 können Druckschwankungen auftreten, die sich beispielsweise durch Wassertropfen, unterschiedliche Feuchtegrade oder verstopfte Kanäle ergeben können. Bereits relativ kleine Druckschwankungen können einen großen Einfluss auf den Oxidator-Volumenstrom ausüben. Beispielsweise wurde festgestellt, dass Druckschwankungen in der Größenordnung von 1 mbar eine Oxidator-Volumenstromänderung in der Größenordnung von ca. 1 % bewirken können.

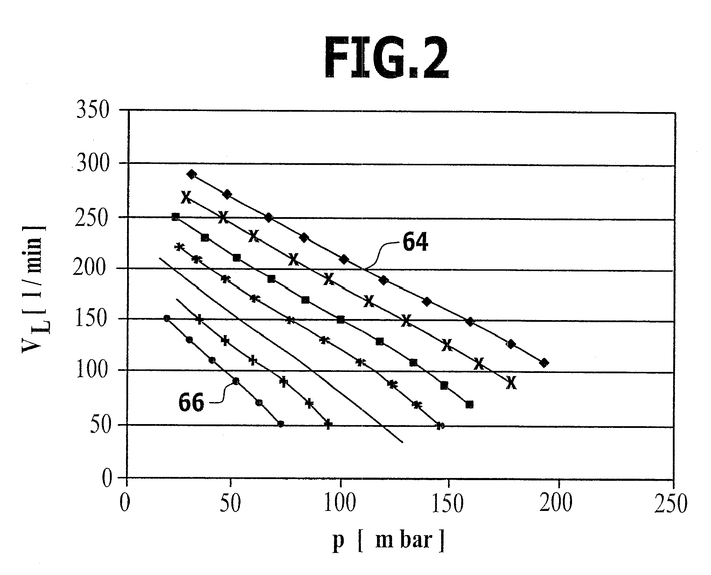

In Figur 2 ist für ein Direktmethanol-Brennstoffzellensystem die Abhängigkeit des Luftvolumenstroms V_{L} als Oxidator-Volumenstrom von dem Gegendruck p für verschiedene Steuerspannungen eines Kompressors der Fördereinrichtung 26 gezeigt. Die obere Kurve 64 hat dabei die höchste Steuerspannung (d. h. der Kompressor ist mit der größten Leistungsaufnahme betrieben), und die untere Kurve 66 hat die kleinste Steuerspannung. Die obere Kurve 64 entspricht einer Steuerspannung von 7 Volt für den Kompressor und die untere Kurve 66 einer Steuerspannung von 4 Volt. Die dazwischenliegenden Kurven unterscheiden sich um einen Schritt von jeweils 0,5 Volt.

Man erkennt in dem Diagramm gemäß Figur 2 die starke Abhängigkeit des Oxidator-Volumenstroms sowohl vom Gegendruck als auch von einem Antriebsparameter der Fördereinrichtung 26 (in diesem Beispiel die Steuerspannung).

Erfindungsgemäß wird der tatsächliche Oxidator-Volumenstrom (Ist-Oxidator-Volumenstrom) wie folgt ermittelt:
Der Gegendruck am Brennstoffzellensystem 10 für die Oxidator-Förderung wird durch den Drucksensor 62 ermittelt. Es werden ein oder mehrere Antriebsparameter der Fördereinrichtung 26 (insbesondere Steuerspannung oder Steuerstrom) erfasst. Aus Kalibrierungsdaten wie in Figur 2 dargestellt wird dann der Oxidator-Volumenstrom bestimmt.
Zur Bestimmung des Oxidator-Volumenstroms muss kein Volumenstrom-Sensor vorgesehen werden, sondern ein oder mehrere Drucksensoren 62 zur Ermittlung des Gegendrucks am Brennstoffzellensystem 10 sind ausreichend.

Die Kalibrierungsdaten des Oxidator-Volumenstroms in Abhängigkeit vom Gegendruck und von dem oder den Antriebsparametern wurden zuvor an dem Brennstoffzellensystem 10 ermittelt. Für diese Ermittlung kann ein Volumenstrom-Sensor eingesetzt werden.

Üblicherweise wird ein Brennstoffzellensystem 10 an einem Oxidator-Arbeitspunkt oder in einem Oxidator-Arbeitspunktbereich betrieben, bei dem Oxidator in einem überstöchiometrischen Faktor zugeführt wird. Üblicherweise soll der Oxidator-Volumenstrom an dem Arbeitspunkt oder in dem Arbeitspunktbereich konstant gehalten werden. Es ist deshalb eine Einstellung bzw. eine Regelung des Oxidator-Volumenstroms notwendig.

Wenn beispielsweise bei Luftsauerstoff als Oxidator zuviel Luft zugeführt wird, dann kann ein erhöhter Wasseraustrag erfolgen. Bei einem Polymermembran-Brennstoffzellensystem kann dies eine Austrocknung der Membran zur Folge haben. Bei einem Direktmethanol-Brennstoffzellensystem ist dadurch eine erhöhte Wasserrückführung notwendig und eine erhöhte Kühlleistung. Die Kühlleistung kann zu hoch sein, was zu zu niedrigen Betriebstemperaturen führen kann. Die Fördereinrichtung 26 mit einem Kompressor ist ein starker Leistungsaufnehmer. Wenn der Oxidator-Volumenstrom unnötig hoch ist, dann tritt ein entsprechend hoher unnötiger Leistungsverlust auf.

Wenn der Oxidator-Volumenstrom zu gering ist, dann kann eine Flutung der Brennstoffzellen 14 mit Wasser erfolgen. Es besteht grundsätzlich die Gefahr, dass den Brennstoffzellen 14 zu wenig Oxidator zugeführt wird. Die Kühlleistung kann zu gering sein und zu einer thermischen Belastung von Brennstoffzellenmembranen führen.

Durch die Vorgabe eines optimierten Arbeitspunkts bzw. Arbeitspunktbereichs wird ein optimierter Oxidator-Volumenstrom vorgegeben. Dieser bildet einen Soll-Wert. Der Ist-Wert des Oxidator-Volumenstroms kann durch Ermittlung des Gegendrucks über den Drucksensor 62 und des oder der Antriebsparameter der Fördereinrichtung 26 über Kalibrierungsdaten (vgl. Figur 2) bestimmt werden. Die Steuerungs- und/oder Regelungseinrichtung 60 kann dann prüfen, ob eine Abweichung zwischen Ist-Wert und Soll-Wert vorliegt. Die Regelgröße ist der Oxidator-Volumenstrom, wobei die Steuergröße der oder die Antriebsparameter der Fördereinrichtung 26 sind. Ist bei einem gegebenen Gegendruck (der sich über die Zeit auch ändern kann) beispielsweise der Oxidator-Volumenstrom zu hoch, dann wird die Steuerspannung für den Antrieb der Fördereinrichtung 26 reduziert. Ist der tatsächliche Oxidator-Volumenstrom im Vergleich zu dem Soll-Volumenstrom zu niedrig, dann wird die Steuerspannung erhöht.

Es lässt sich über die Steuerungs- und/oder Regelungseinrichtung 60 der Oxidator-Volumenstrom auf den Soll-Wert einstellen bzw. einregeln.

Durch die Erfassung des Gegendrucks über den oder die Drucksensoren 62 und die Erfassung beispielsweise der Steuerspannung der Fördereinrichtung 26 lässt sich über das erfindungsgemäße Verfahren der Ist-Oxidator-Volumenstrom ermitteln. Die Ermittlung erfolgt über ein Kennlinienfeld des Oxidator-Volumenstroms in seiner Abhängigkeit von dem oder den Antriebsparametern der Fördereinrichtung 26 und dem Gegendruck, d. h. mittels der Kalibrierungsdaten. Während des Betriebs des Brennstoffzellensystems 10 lässt sich über diese Ermittlung des Oxidator-Volumenstroms eine einfache Einstellbarkeit bzw. Einregelbarkeit des Oxidator-Volumenstroms auf einen Soll-Wert an einem Arbeitspunkt bzw. in einem Arbeitspunktbereich erreichen.

Das entsprechende Brennstoffzellensystem lässt sich einfach und kostengünstig sowie mit geringem Gewicht und geringem Volumen realisieren. Der Einstellungsaufwand bzw. Regelungsaufwand ist minimiert.

## Patentansprüche

1. Verfahren zur Ermittlung und/oder Einstellung des Oxidator-Volumenstroms, welcher einer Kathodeneinrichtung eines Brennstoffzellensystems zugeführt wird, bei dem der Oxidator über eine angetriebene Fördereinrichtung der Kathodeneinrichtung zugeführt wird, der Gegendruck gemessen wird, gegen den Oxidator am Brennstoffzellensystem gefördert wird, und aus dem gemessenen Gegendruck und einem oder mehreren Antriebsparametern der Fördereinrichtung der zugeführte Oxidator-Volumenstrom bestimmt wird.

2. Verfahren nach Anspruch 1, **dadurch gekennzeichnet, dass** die Fördereinrichtung einen Verdichter umfasst.

3. Verfahren nach Anspruch 1 oder 2, **dadurch gekennzeichnet, dass** der mindestens eine Antriebsparameter eine Steuerspannung oder ein Steuerstrom eines Antriebs der Fördereinrichtung ist.

4. Verfahren nach einem der vorangehenden Ansprüche, **dadurch gekennzeichnet, dass** der Oxidator-Volumenstrom über zuvor bestimmte Kalibrierungsdaten ermittelt wird.

5. Verfahren nach Anspruch 4, **dadurch gekennzeichnet, dass** die Kalibrierungsdaten in einer Form vorliegen, welche die Abhängigkeit des Oxidator-Volumenstroms vom Gegendruck und dem mindestens einen Antriebsparameter charakterisiert.

6. Verfahren nach einem der vorangehenden Ansprüche, **dadurch gekennzeichnet, dass** der Oxidator-Volumenstrom auf einen Arbeitspunkt oder einen Arbeitspunktbereich eingestellt oder eingeregelt wird.

7. Verfahren nach Anspruch 6, **dadurch gekennzeichnet, dass** der Arbeitspunkt oder Arbeitspunktbereich als im wesentlichen konstant festgelegt wird.

8. Verfahren nach Anspruch 6 oder 7, **dadurch gekennzeichnet, dass** die Regelgröße der Oxidator-Volumenstrom ist.

9. Verfahren nach einem der Ansprüche 6 bis 8, **dadurch gekennzeichnet, dass** die Steuergröße oder Steuergrößen der oder die Antriebsparameter sind.

10. Verfahren nach einem der Ansprüche 6 bis 9, **dadurch gekennzeichnet, dass** ein Ist-Wert des Oxidator-Volumenstroms mit einem Soll-Wert des Oxidator-Volumenstroms verglichen wird und der oder die Antriebsparameter variiert werden, bis der Soll-Wert erreicht wird.

11. Verfahren nach Anspruch 10, **dadurch gekennzeichnet, dass** die Variation des mindestens einen Antriebsparameters auf Grundlage von Kalibrierungsdaten erfolgt.

12. Verfahren nach einem der vorangehenden Ansprüche, **dadurch gekennzeichnet, dass** zur Messung des Gegendrucks mindestens ein Drucksensor vorgesehen wird.

13. Verfahren nach Anspruch 12, **dadurch gekennzeichnet, dass** der mindestens eine Drucksensor an einem Zuführungsstrang zur Kathodeneinrichtung angeordnet wird.

14. Brennstoffzellensystem, umfassend mindestens eine Brennstoffzelle (14) mit einer Anodeneinrichtung (16) und einer Kathodeneinrichtung (18), wobei der Anodeneinrichtung (16) Brennstoff und der Kathodeneinrichtung (18) Oxidator zuführbar ist, **dadurch gekennzeichnet, dass** mindestens ein Drucksensor (62) vorgesehen ist, durch den der Gegendruck am Brennstoffzellensystem messbar ist, gegen welchen Oxidator gefördert wird.

15. Brennstoffzellensystem nach Anspruch 14, **dadurch gekennzeichnet, dass** der mindestens eine Drucksensor (62) an einem Zuführungsstrang (24) für Oxidator zur Kathodeneinrichtung (18) angeordnet ist.

16. Brennstoffzellensystem nach Anspruch 14 oder 15, **dadurch gekennzeichnet, dass** eine Steuerungs- und/oder Regelungseinrichtung (60) vorgesehen ist, über welche eine angetriebene Fördereinrichtung (26) für Oxidator ansteuerbar ist.

17. Brennstoffzellensystem nach Anspruch 16, **dadurch gekennzeichnet, dass** der mindestens eine Drucksensor (62) mit der Steuerungs- und/oder Regelungseinrichtung (60) verbunden ist, um dieser seine Daten bereitzustellen.

18. Brennstoffzellensystem nach Anspruch 17, **dadurch gekennzeichnet, dass** die Steuerungs- und/oder Regelungseinrichtung (60) aus einem oder mehreren Antriebsparametern der Fördereinrichtung (26) und den Daten des Drucksensors (62) den Oxidator-Volumenstrom ermittelt.

19. Brennstoffzellensystem nach Anspruch 17 oder 18, **dadurch gekennzeichnet, dass** die Steuerungs- und/oder Regelungseinrichtung (60) den Oxidator-Volumenstrom über Steuerung von einem oder mehreren Antriebsparametern der Fördereinrichtung (26) regelt.

20. Brennstoffzellensystem nach einem der Ansprüche 14 bis 19, **dadurch gekennzeichnet, dass** die Fördereinrichtung (26) einen Verdichter umfasst.
